# EUROPEAN PATENT APPLICATION

(11) **EP 4 821 812 A1**
(43) Date of publication of application: **14.10.2026**
(21) Application number: 25169225.7
(22) Date of filing: 08.04.2025
(51) Int. Cl.: B64D 11/00, B64D 11/04

(54) **TROLLEY ARRANGEMENT, TROLLEY SYSTEM AND AIRCRAFT**

(71) Applicant: AIRBUS Operations GmbH, 21129 Hamburg (DE); Airbus (S.A.S.), 31700 Blagnac (FR)
(72) Inventor: Kiehne, Oliver, 21129 Hamburg (DE); Trümper, Torsten, 21129 Hamburg (DE); Roussety, Jean Roméo, 31700 Blagnac (FR)
(74) Representative: Schicker, Silvia

(57) **Abstract**

A trolley arrangement (10, 10'), in particular for use in an aircraft cabin, comprises a trolley body (12) defining an interior space, a plurality of carriers (26) removably accommodated in the interior space of the trolley body (12), a plurality of heating devices (32, 32'), each heating device (32, 32') being associated with at least one of the plurality of carriers (26) and being configured to heat an item (28) arranged in at least a partial region (34a-c) of the carrier (26), a power distribution network (38) connectable to each of the heating devices (32, 32'), and a control unit (54) configured to receive an individual heating command for each of the heating devices (32, 32') and to control the power distribution network (38) so as to individually provide power to a selected one of the plurality of heating devices (32, 32') in response to a respective individual heating command.

## Description

### Technical Field

The invention relates to a trolley arrangement and a trolley system, in particular for use in an aircraft cabin. Further, the invention relates to an aircraft equipped with such a trolley arrangement and/or trolley system.

### Background

In vehicles of transportation, such as modern aircraft or trains, trolleys are employed for stowing and distributing meals for the passengers on board the vehicle of transportation. An aircraft trolley is usually chilled, for example by means of an air chiller installed in the region of a trolley compartment provided in an aircraft galley or by means of an internal chilling device. Thereby, food items stowed in the trolley until their distribution to the passengers can be kept fresh.

In case hot meals should be served, crew members have to remove the food items to be heated from the trolley, heat them in an oven provided in the aircraft galley and finally put them back into the trolley, e.g. on respective trays provided in trolley. This is time consuming and cumbersome in particular in view of the limited working space available in the galley area of an aircraft. Further, it can not be excluded that the hot food items get cold again until they are finally served.

DE 10 2009 053 584 A1 describes a trolley which comprises a container equipped with an electrical consumer, a primary winding in a first core and a secondary winding in a second core. The secondary winding is arranged in the container. The primary winding is attached on the vehicle side in such a manner that movement of the container to a receiving position within the trolley results in alignment of the primary winding and the secondary winding so that an alternating voltage is induced that is applied to the electrical consumer provided in the container. The electrical consumer may be a cooling device or a heating device.

### Summary

The invention is directed to the object to provide a trolley arrangement and a trolley system which allow an efficient and flexible heating of food items on board a vehicle of transportation. Further, the invention is directed to the object to provide an aircraft equipped with such a trolley arrangement and/or trolley system.

This object is addressed by a trolley arrangement as defined in claim 1, a trolley system as defined in claim 10 and an aircraft as defined in claim 11.

A trolley arrangement which is particularly suitable for use in an aircraft cabin for stowing and distributing food items to passengers on board the aircraft comprises a trolley body defining an interior space. A bottom panel of the trolley body may be provided with wheels which may be attached to a lower surface of the bottom panel. The trolley arrangement further comprises a plurality of carriers which are removably accommodated in the interior space of the trolley body. The carriers may, for example, be designed in the form of trays onto which food items can be placed. The trolley body may be provided with a plurality of guide and support rails which are configured to guide a carrier when the carrier is pushed into the interior space of the trolley body and to support the carrier in place when being accommodated in the interior space of the trolley body. The guide and support rails may be arranged in pairs and may extend from inner surfaces of opposing sidewalls of the trolley body.

The trolley arrangement further comprises a plurality of heating devices. Each heating device is associated with at least one of the pluralities of carriers and is configured to heat an item, for example a food item, which is arranged in at least a partial region of the carrier. The carrier may comprise a plurality of partial regions, wherein each partial region may be configured to receive a certain food item. For example, the carrier may comprise one or more partial region(s) configured to receive a cold dish such as salad or a dessert, and one or more partial region(s) configured to receive a dish which requires heating. It is, however, also conceivable that the carrier is not subdivided into partial regions and that the entire carrier is intended to receive one or more food item(s) to be heated.

The trolley arrangement further comprises a power distribution network which is connectable to each of the heating devices. Specifically, the power distribution network is individually connectable to each of the heating devices. The power distribution network may comprise a power line which may be installed in the trolley body and a plurality of interfaces. The interfaces of the power distribution network may be configured to interact with respective interfaces provided on the heating devices. It is, however, also conceivable that the power distribution network is connected to each of the heating devices via a wireless connection.

A control unit is configured to receive an individual heating command for each of the heating devices and to control the power distribution network so as to individually provide power to at least one of the plurality of heating devices in response to a respective individual heating command. The control unit may receive only a single individual heating command and may accordingly control the power distribution network so as to individually provide power to only one of the plurality of heating devices. It is, however, also conceivable that the control unit receives several single individual heating commands which are associated with several different heating devices at a time or at partially overlapping times. The control unit may then control the power distribution network so as to individually provide power to the several different heating devices.

The control unit may be installed in or on the the trolley body or remote from the trolley body. Communication between the control unit and the power distribution network may be effected via a wire bound or wireless communication link. The control unit may be a control unit which exclusively serves to control the power distribution network of the trolley arrangement. It is, however, also conceivable that the control unit is integrated into a superordinate control system which, besides the controlling of the power distribution network of the trolley arrangement, also fulfils other control functions.

The trolley arrangement described herein allows a selective and individual heating of food items accommodated within the trolley body by selectively activating specific heating devices associated with the specific carriers carrying the food items to be heated. It is therefore no longer required to manually remove the food items to be heated from the trolley body, heat them in an oven and finally put them back into the trolley body. The provision of hot meals on board an aircraft thus can be significantly simplified. Further, it can be ensured that food items intended to be served hot can be kept hot until they are finally distributed to the passengers.

In an embodiment of the trolley arrangement, at least one of the plurality of heating devices is formed integral with the carrier. For example, the heating device may be integrated into the carrier so as to form a heating zone in at least a partial region of the carrier. Alternatively or additionally, at least one of the plurality of heating devices may be arranged in the interior space of the trolley body. A heating device which is arranged in the interior space of the trolley body may, for example, be plate-shaped and be installed in the interior space of the trolley body above or below an accommodation position of a carrier carrying an item to be heated. The trolley arrangement may be equipped exclusively with heating devices formed integral with the carriers of the trolley arrangement or may be equipped exclusively with heating devices installed in the interior space of the trolley body. It is, however, also conceivable that the trolley arrangement comprises both heating devices formed integral with the carriers and heating devices installed in the interior space of the trolley body.

At least one of the plurality of heating devices which is formed integral with a carrier may be arranged in the region of an upper surface of the carrier which carries the item to be heated. By arranging the heating device in the region of the upper surface of the carrier, a lower surface of the carrier can be maintained relatively cool even during operation of the heating device such that the carrier can still be used for serving a meal to a passenger.

At least one of the plurality of heating devices which is formed integral with a carrier may be provided with a heating device interface which establishes a connection with a corresponding power distribution network interface when the carrier is arranged in place in the trolley body. For example, one of the interacting interfaces may be provided with preferably spherical projections which slide into corresponding grooves or indentations provided on the other one of the interfaces when the carrier is slided into the trolley body. When the carrier is arranged in place in the trolley body, the projections are received in the grooves or indentations and a power connection between the carrier and the power distribution network is established. Further, one of the interacting interfaces may be provided with spring-loaded safety pins which slide into corresponding grooves or indentations provided on the other one of the interfaces when the carrier is slided into the trolley body. Upon decoupling the interfaces, when the carrier is removed from the trolley body, the spring-loaded safety pins may remove power at other projections of the interface before these projections are physically decoupled. Alternatively, it is conceivable to provide the corresponding interfaces of the heating devices and the power distribution network with a connection mechanism featuring a floating part that is pulled towards the mating interface using a magnetic force, a snap fit connection or the like.

At least one of the plurality of heating devices may be an induction heating device, an electrical resistance heating device, an infrared heating device, and/or a microwave heating device. The trolley arrangement may be equipped with only one type of heating device or different types of heating devices.

The trolley arrangement may further comprise at least one insulation device shielding at least one of the plurality of heating devices and/or the item to be heated from. By means of the insulation device, an undesired heat distribution within the interior space of the trolley body can be prevented. For example, an insulation device may be designed in the form of an insulation layer integrated into the carrier to shield an integrated heating device an/or a food item to be heated from the surroundings. For example, an insulating layer may be provided on a bottom surface of the carrier. Alternatively, an insulation device may be arranged around at least a part of the food item to be heated in order to limit the distribution of heat beyond the food item. Further, the carrier itself in its entirety or in part can act as and form an insulation device provided the carrier is made of suitable material. Moreover, one or more insulation device(s) may be arranged between carriers accommodated in the interior space of the trolley body.

In a preferred embodiment, the trolley arrangement comprises a user interface for inputting the individual heating commands for each of the heating devices. The crew members on board aircraft may use the user interface to activate individual heating devices and to thus heat individual food items accommodated in the trolley body as needed in a convenient manner. For example, the user interface may comprise a screen on which the individual heating devices and/or associated carriers may be displayed. The screen may be designed in the form of a touchscreen such that the heating devices to be activated can easily be selected. The user interface may be connected to the control unit via a wire bound or wireless communication link.

The user interface may also be used to inform the crew members of the operational status of the trolley arrangement and the heating devices. In addition, information regarding the inventory of the trolley arrangement, for example which types of and how many food items are accommodated in the trolley, can be communicated to the crew members via the user interface.

The user interface may be a stationary device which may, for example, be attached to the trolley body or be provided in the region of an aircraft galley. Alternatively, the user interface may be a mobile device that may be carried by a crew member while taking orders of hot meals. The crew member can use the mobile user interface to activate a heating device for heating a selected food item immediately upon taking the order of a hot meal. It is also conceivable that the trolley arrangement comprises a plurality of stationary and/or mobile user interfaces.

In a preferred embodiment, the trolley arrangement further comprises a cooling device configured to cool the interior space of the trolley body. The cooling device may, for example, comprise an air chiller which is installed in a galley surrounding the trolley and which is configured to blow cold air into the interior space of the trolley body or to surround the trolley by cold air. Alternatively or additionally, a chilling device may be integrated into the trolley body or the interior space of the trolley body may be cooled with dry ice. The provision of a cooling device for cooling the interior space of the trolley body makes it possible that food items can be stowed in the trolley and kept fresh until they are finally used.

The cooling device may be connected to the power distribution network of the trolley arrangement. It is, however, also conceivable that the cooling device is supplied with power independent of the power distribution network. The control unit of the trolley arrangement may be configured to also control the cooling device. For example, the control unit may be configured to deactivate the cooling device when one or more heating command(s) are received. In case the cooling device is connected to the power distribution network of the trolley arrangement, the control unit may deactivate the cooling device by interrupting the power supply to the cooling device via the power distribution network.

The trolley system comprises an above-described trolley arrangement. Further, the trolley system comprises a docking station which is configured to establish a power connection between the power distribution system of the trolley arrangement and a vehicle power network. The vehicle power network may, for example, be an aircraft electrical network. The docking station may be configured to establish an electromechanical or contactless coupling/decoupling of the power distribution system of the trolley arrangement and the vehicle power network.

An aircraft comprises an above-described trolley arrangement and/or an above-described trolley system.

### Brief description of the drawings

Preferred embodiments of the invention in the following will be described with reference to the accompanied schematic drawings, wherein
- Figure 1: shows a first embodiment of a trolley system comprising a trolley arrangement;
- Figure 2: shows a three-dimensional view of a trolley body of the trolley arrangement depicted in figure 1;
- Figure 3: shows a top view of a carrier of the trolley arrangement depicted in figure 1;
- Figures 4a and b: show a rear view and a top view of an exemplary heating device interface of a heating device which is integrated into the carrier depicted in figure 3;
- Figures 5a and b: show a rear view and a top view of an exemplary power distribution network interface for interacting with the heating device interface depicted in figure 4;
- Figure 6: shows a second embodiment of a trolley system comprising a trolley arrangement;
- Figure 7: shows a three-dimensional view of a trolley body of the trolley arrangement depicted in figure 6;
- Figure 8: shows a top view of a carrier and a heating device of the trolley arrangement depicted in figure 6; and
- Figure 9: shows an aircraft which is equipped with a trolley system depcited in figure 1 or 7.

### Detailled description

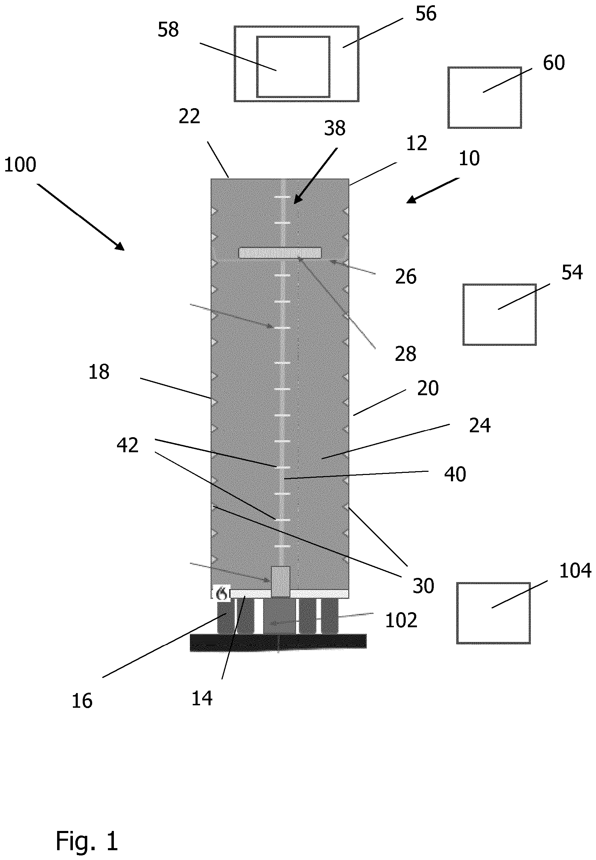

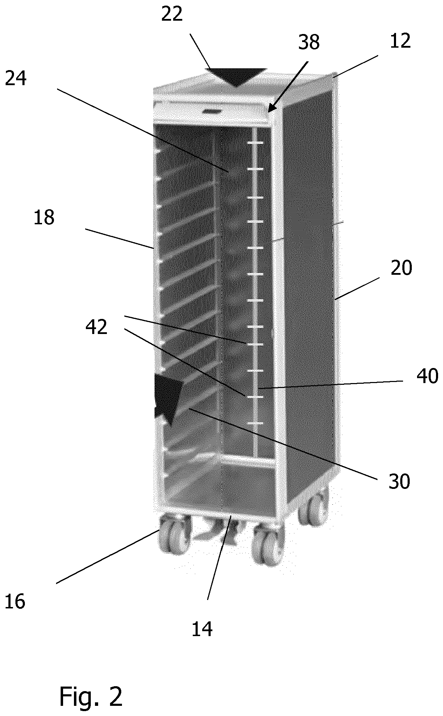

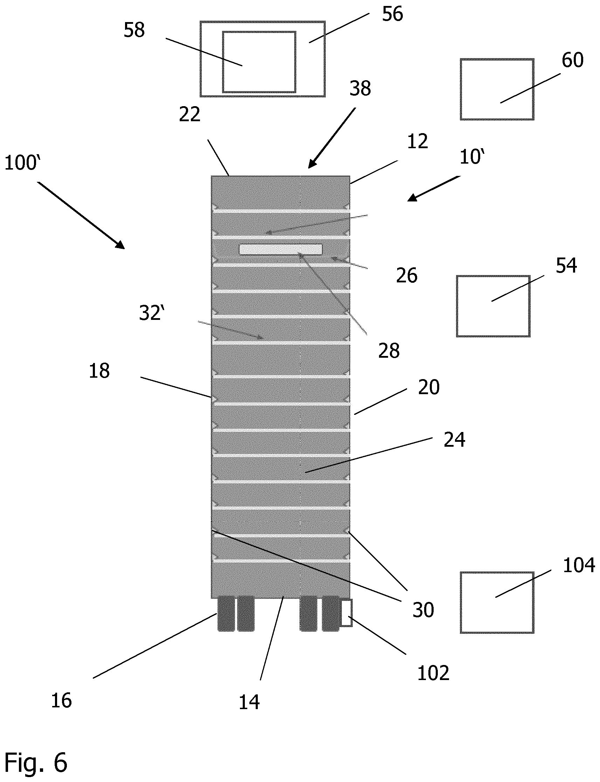

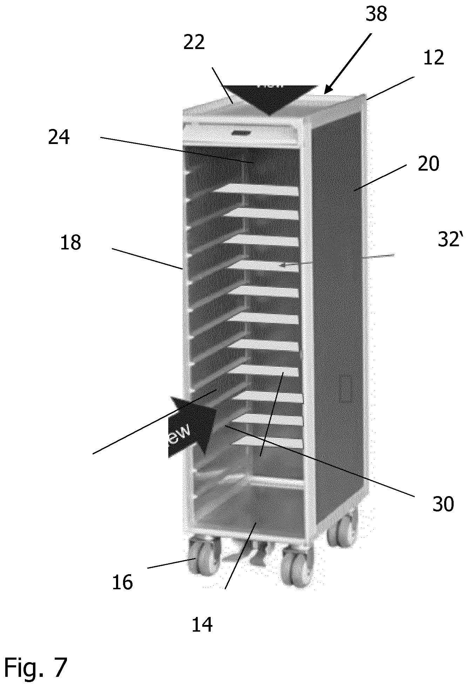

Figures 1 and 6 show two different embodiments of a trolley system 100, 100' which is particularly suitable for use in an aircraft cabin for stowing and distributing food items to passengers on board the aircraft. The trolley system 100, 100' comprises a trolley arrangement 10, 10' with a trolley body 12 defining an interior space. A three-dimensional view of a trolley body 12 employed in the trolley systems 100, 100' is shown in figures 2 and 7. The trolly body 12 comprise a bottom panel 14 which is provided with wheels 16 attached to a lower surface of the bottom panel 14. Further, the trolley body comprises opposing sidewalls 18, 20, a top wall 22 and a rear wall 24. In addition, a door (not shown in the drawings) is provided for closing the interior space of the trolley body 12, e.g. when the trolly arrangement 10, 10' is stowed in a galley of the aircraft.

The trolley arrangement 10, 10' further comprises a plurality of carriers 26 which are removably accommodated in the interior space of the trolley body 12. In figures 1 and 6, only one carrier 26 is depicted. However, in use of the trolley arrangement 10, 10', the trolly body 12 usually is filled with carriers 26 wich are accommodated in the interior space of the trolly body 12 one above the other. The carriers 26 are typically designed in the form of trays onto which at least one food item 28 can be placed. The trolley body 12 is provided with a plurality of guide and support rails 30 which are configured to guide a carrier 26 when the carrier is pushed into the interior space of the trolley body 12. Further, the guide and support rails 30 interact with opposing side rims of the carrier 26 and support the carrier 26 in place when the carrier 26 is accommodated in the interior space of the trolley body 12. The guide and support rails 30 are arranged in pairs and extend from inner surfaces of the opposing sidewalls 18, 20 of the trolley body 12.

The trolley arrangement 10, 10' further comprises a plurality of heating devices 32, 32'. The heating devices 32, 32' may be induction heating devices, electrical resistance heating devices, infrared heating devices, and/or microwave heating devices, wherein the trolley arrangement 10, 10' may be equipped with only one type of heating device 32, 32' or different types of heating devices 32, 32'.

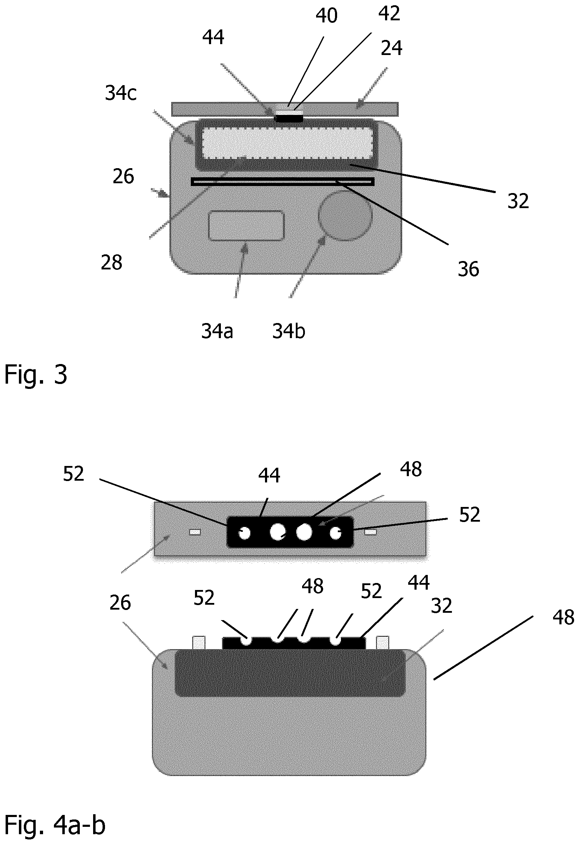

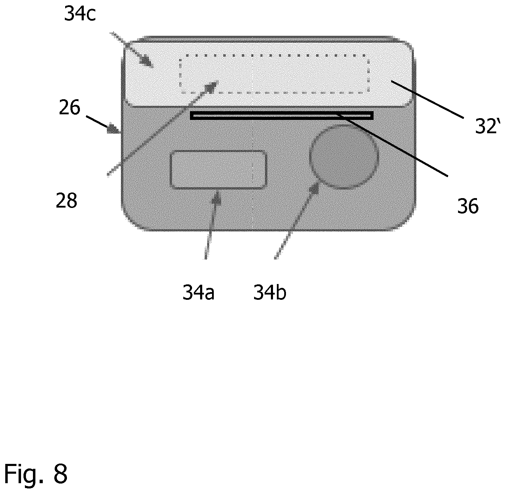

Each heating device 32, 32' is associated with at least one of the pluralities of carriers 26 and is configured to heat an item, for example a food item 28, which is arranged in at least a partial region of the carrier 26. As shown in figures 3 and 8, in the embodiments of a trolley arrangement 10, 10' shown in the figures, the carrier 26 comprise a plurality of partial regions 34a-c, wherein each partial region 34a-c is configured to receive a certain food item. In the examplary embodiment depicted in the drawings, the carrier 26 comprise two partial regions 34a, 34b configured to receive a cold dish such as salad or a dessert, and one partial region 34c configured to receive a dish which requires heating.

In the embodiment of a trolley arrangement 10 shown in figures 1 to 5, the heating devices 32 are formed integral with the carrier. As indicated in figure 3, each heating device 32, which may, e.g., be designed in the form of an electrical resistance heating device, is integrated into the carrier 26 so as to form a heating zone in at least a partial region of the carrier 26 and in particular in the partial region 34c which, in use of the carrier 26, recieves a food item 28 to be heated. Specifically, the heating device 32 is arranged in the region of an upper surface of the carrier 26 which carries the item 28 to be heated. As a result, a lower surface of the carrier 26 can be maintained relatively cool even during operation of the heating device 32 such that the carrier 26 can still be used for serving a meal to a passenger.

Alternatively or additionally, the heating devices 32' may be arranged in the interior space of the trolley body 12 as is it the case in the embodiment of a trolley arrangement 10' shown in figures 6 to 8. The heating devices 32' are plate-shaped and are installed in the interior space of the trolley body 12 below an accommodation position of each carrier 26 in such a manner that each heating device 32 coincides with a partial region 34c of a carrier 26, which receives a dish to be heated, see figure 8. The heating devices 32' may, e.g., be desgned as infrared heating devices.

The embodiment of a trolley arrangement 10 shown in figures 1 to 5 is equipped exclusively with heating devices 32 formed integral with the carriers 26 of the trolley arrangement 10, whereas the embodiment of a trolley arrangement 10' shown in figures 6 to 8 is equipped exclusively with heating devices 32' installed in the interior space of the trolley body 12. It is, however, also conceivable that the trolley arrangement 10, 10' comprises both heating devices 32 formed integral with the carriers 26 and heating devices 32' installed in the interior space of the trolley body 12.

If needed, the trolley arrangement 10, 10' may further comprise at least one insulation device 36 shielding at least one of the plurality of heating devices 32 and/or the food item to be heated 28 from the surroundings. For example, the insulation device 36 may be arranged on the carrier 26 between the partical region 34c carrying the food item 28 to be heated and the partical region 34a-b intended for carrying cold food items, see figures 3 and 8. The insulation device 36 may, however, also be designed in the form of an insulation layer integrated into the carrier 26 to shield an integrated heating device 32 an/or a food item 28 to be heated from the surroundings. For example, an insulating layer may be provided on a bottom surface of the carrier 26. Alternatively, an insulation device 36 may be arranged around the food item 28 to be heated. Further, the carrier 26 itself in its entirety or in part can act as and form an insulation device 36 if the carrier 36 is made of suitable insulation material. Moreover, one or more insulation device(s) 36 may be arranged between carriers 26 accommodated in the interior space of the trolley body 12.

The trolley arrangement 10, 10' further comprises a power distribution network 38 which is connectable to each of the heating devices 32, 32'. Specifically, the power distribution network 38 is individually connectable to each of the heating devices 32, 32'. In the trolley arrangement 10 shown in figures 1 to 5, the power distribution network 38 comprises a power line 40 which is installed in the trolley body 12 and a plurality of interfaces 42, see figures 1 and 2. The interfaces 42 of the power distribution network 40 are configured to interact with respective interfaces 44 provided on the heating devices 32, 32'.

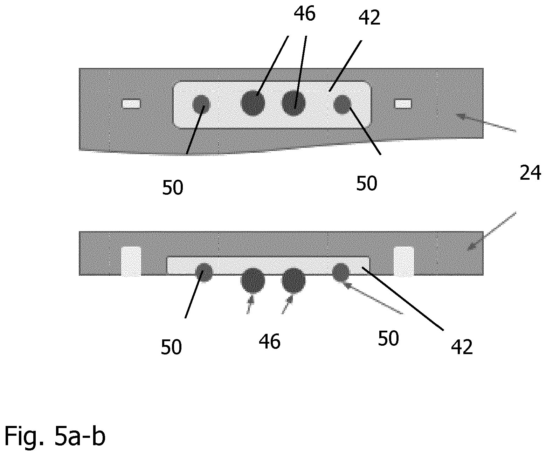

In the trolley arrangement 10 shown in figures 1 to 5, wherein each heating device 32 is formed integral with a carrier 26, each of the heating devices 32 is provided with a heating device interface 44 which establishes a connection with a corresponding power distribution network interface 42 when the carrier 26 is arranged in place in the trolley body 12. For example, as shown in figures 5a-b, one of the interacting interfaces 42, 44, here the power distribution network interface 42, is provided with preferably spherical projections 46 which slide into corresponding grooves or indentations 48 provided on the other one of the interfaces 42, 44, here the heating device interface 44, when the carrier 26 is slided into the trolley body 12. When the carrier 26 is arranged in place in the trolley body 12, the projections 46 are received in the grooves or indentations 48 and a power connection between the carrier 26 and the power distribution network 38 is established.

Further, one of the interacting interfaces 42, 44, here the power distribution network interface 42, is provided with spring-loaded safety pins 50 which slide into corresponding grooves or indentations 52 provided on the other one of the interfaces 42, 44, here the heating device interface 44, when the carrier 26 is slided into the trolley body 12. Upon decoupling the interfaces 42, 44, when the carrier 26 is removed from the trolley body 12, the spring-loaded safety pins 50 remove power at the other projections 46 of the interface 42 before these projections 46 are physically decoupled. Alternatively, it is conceivable to provide the corresponding interfaces 42, 44 of the heating devices 32 and the power distribution network 38 with a connection mechanism featuring a floating part that is pulled towards the mating interface 42, 44 using a magnetic force, a snap fit connection or the like.

In the trolley arrangement 10' shown in figures 6 to 8, the power distribution network 38 is connected to each of the heating devices 32' via a wireless connection.

Further, the trolley arrangement 10, 10' comprises a control unit 54 which is configured to receive an individual heating command for each of the heating devices 32, 32' and to control the power distribution network 38 so as to individually provide power to at least one of the plurality of heating devices 32, 32' in response to a respective individual heating command. The control unit 44 may be installed in or on the the trolley body 12 or remote from the trolley body 12. Communication between the control unit 12 and the power distribution network 38 may be effected via a wire bound or wireless communication link.

Further, the trolley arrangement 10, 10' comprises a user interface 56 for inputting the individual heating commands for each of the heating devices 32, 32'. The user interface 56 comprises a a touchscreen 58 on which the individual heating devices 32, 32' and/or associated carriers 26 are displayed. Further, the user interface displays information on the operational status of the trolley arrangement 10, 10' and the heating devices 32, 32' and information regarding the inventory of the trolley arrangement 10, 10', for example which types of and how many food items are accommodated in the trolley body 12. Via the touchscreen 58, the heating device(s) 32, 32' to be activated can easily be selected on demand.

The user interface 56 may be a stationary device which may, for example, be attached to the trolley body 12 or be provided in the region of an aircraft galley. Alternatively, the user interface 56 may be a mobile device that can be carried by a crew member while taking orders of hot meals. The crew member can use the mobile user interface 56 to activate a heating device 32, 32' for heating a selected food item immediately upon taking the order of a hot meal. It is also conceivable that the trolley arrangement 10, 10' comprises a plurality of stationary and/or mobile user interfaces 56. The user interface 56 may be connected to the control unit 44 via a wire bound or wireless communication link.

The trolley arrangement 10, 10' further comprises a cooling device 60 configured to cool the interior space of the trolley body. The cooling device 60 may, for example, comprise an air chiller which is installed in a galley surrounding the trolley and which is configured to blow cold air into the interior space of the trolley body 12. Alternatively or additionally, a chilling device may be integrated into the trolley body 12 or the interior space of the trolley body 12 may be cooled with dry ice. The cooling device 60 is connected to the power distribution network 38 of the trolley arrangement 12 or is supplied with power independent of the power distribution network 38. The control unit 54 of the trolley arrangement 10, 10' is configured to also control the cooling device 60. For example, the control unit 54 is configured to deactivate the cooling device 60 when one or more heating command(s) are received. In case the cooling device 60 is connected to the power distribution network 38 of the trolley arrangement 10, 10', the control unit 54 may deactivate the cooling device 60 by interrupting the power supply to the cooling device 60 via the power distribution network 58.

Finally, the trolley system 100, besides the bove-described trolley arrangement 10, 10', comprises a docking station 102 which is configured to establish a power connection between the power distribution system 32 of the trolley arrangement 10, 10' and a vehicle power network 104. The vehicle power network 104 may, for example, be an aircraft electrical network. The docking station 102 may be configured to establish an electromechanical or contactless coupling/decoupling of the power distribution system 38 of the trolley arrangement 10, 10' and the vehicle power network 104.

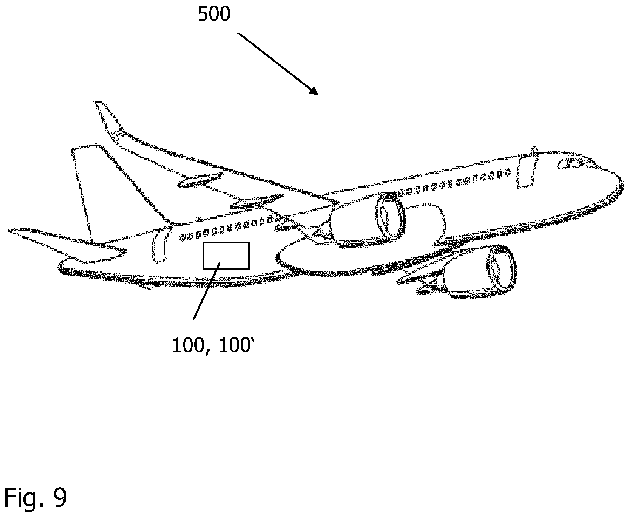

Figure 9 shows an aircraft 500 which is equipped with an above-described trolley system 100.

## Claims

1. Trolley arrangement (10, 10'), in particular for use in an aircraft cabin, comprising:
- a trolley body (12) defining an interior space;
- a plurality of carriers (26) removably accommodated in the interior space of the trolley body (12);
- a plurality of heating devices (32, 32'), each heating device (32, 32') being associated with at least one of the plurality of carriers (26) and being configured to heat an item (28) arranged in at least a partial region (34a-c) of the carrier (26);
- a power distribution network (38) connectable to each of the heating devices (32, 32'); and
- a control unit (54) configured to receive an individual heating command for each of the heating devices (32, 32') and to control the power distribution network (38) so as to individually provide power to at least one of the plurality of heating devices (32, 32') in response to a respective individual heating command.

2. Trolley arrangement (10, 10') according to claim 1,
wherein at least one of the plurality of heating devices (32) is formed integral with a carrier (26) and/or wherein at least one of the plurality of heating devices (32') is arranged in the trolley body (12).

3. Trolley arrangement (10, 10') according to claim 2,
wherein at least one of the plurality of heating devices (32, 32') formed integral with a carrier (26) is arranged in the region of an upper surface of the carrier (26) which carries the item (28) to be heated.

4. Trolley arrangement (10, 10') according to claim 2 or 3,
wherein at least one of the plurality of heating devices (32, 32') formed integral with a carrier (26) is provided with a heating device interface (44) which establishes a connection with a corresponding power distribution network interface (42) when the carrier (26) is arranged in place in the trolley body (12).

5. Trolley arrangement (10, 10') according to anyone of claims 1 to 4,
wherein at least one of the plurality of heating devices (32, 32') is an induction heating device, an electrical resistance heating device, an infrared heating device, and/or a microwave heating device.

6. Trolley arrangement (10, 10') according to anyone of claims 1 to 5,
further comprising at least one insulation device (36) shielding at least one of the plurality of heating devices (32, 32') and/or the item (28) to be heated.

7. Trolley arrangement (10, 10') according to anyone of claims 1 to 6,
further comprising a user interface (56) for inputting the individual heating commands for each of the heating devices (32, 32'), the user interface (56) being connected to the control unit (54).

8. Trolley arrangement (10, 10') according to claim 7,
wherein the user interface (56) may be a stationary device and/or a mobile device.

9. Trolley arrangement (10, 10') according to anyone of claims 1 to 8,
further comprising a cooling device (60) configured to cool the interior space of the trolley body (12).

10. Trolley system (100) comprising:
- a Trolley arrangement (10, 10') according to anyone of claims 1 to 9; and
- a docking station (102) configured to establish a power connection between the power distribution system (38) of the trolley arrangement (10, 10') and a vehicle power network (104).

11. Aircraft (500) comprising a trolley arrangement (10, 10') according to anyone of claims 1 to 9 and/or trolley system (100) according to claim 10.

## Amended claims

### Amended claims in accordance with Rule 137(2) EPC.

1. Trolley arrangement (10, 10'), in particular for use in an aircraft cabin, comprising:
- a trolley body (12) defining an interior space;
- a plurality of carriers (26) removably accommodated in the interior space of the trolley body (12);
- a plurality of heating devices (32, 32'), each heating device (32, 32') being associated with at least one of the plurality of carriers (26) and being configured to heat an item (28) arranged in at least a partial region (34a-c) of the carrier (26);
- a power distribution network (38) connectable to each of the heating devices (32, 32'); and
- a control unit (54) configured to receive an individual heating command for each of the heating devices (32, 32') and to control the power distribution network (38) so as to individually provide power to at least one of the plurality of heating devices (32, 32') in response to a respective individual heating command;
**characterized in that**
at least one of the plurality of heating devices (32) is formed integral with a carrier (26) and is provided with a heating device interface (44) which establishes a connection with a corresponding power distribution network interface (42) when the carrier (26) is arranged in place in the trolley body (12).

2. Trolley arrangement (10, 10') according to claim 1,
wherein at least one of the plurality of heating devices (32') is arranged in the trolley body (12).

3. Trolley arrangement (10, 10') according to claim 1 or 2,
wherein at least one of the plurality of heating devices (32, 32') formed integral with a carrier (26) is arranged in the region of an upper surface of the carrier (26) which carries the item (28) to be heated.

4. Trolley arrangement (10, 10') according to anyone of claims 1 to 3,
wherein at least one of the plurality of heating devices (32, 32') is an induction heating device, an electrical resistance heating device, an infrared heating device, and/or a microwave heating device.

5. Trolley arrangement (10, 10') according to anyone of claims 1 to 4,
further comprising at least one insulation device (36) shielding at least one of the plurality of heating devices (32, 32') and/or the item (28) to be heated.

6. Trolley arrangement (10, 10') according to anyone of claims 1 to 5,
further comprising a user interface (56) for inputting the individual heating commands for each of the heating devices (32, 32'), the user interface (56) being connected to the control unit (54).

7. Trolley arrangement (10, 10') according to claim 6,
wherein the user interface (56) may be a stationary device and/or a mobile device.

8. Trolley arrangement (10, 10') according to anyone of claims 1 to 7,
further comprising a cooling device (60) configured to cool the interior space of the trolley body (12).

9. Trolley system (100) comprising:
- a Trolley arrangement (10, 10') according to anyone of claims 1 to 8; and
- a docking station (102) configured to establish a power connection between the power distribution system (38) of the trolley arrangement (10, 10') and a vehicle power network (104).

10. Aircraft (500) comprising a trolley arrangement (10, 10') according to anyone of claims 1 to 8 and/or trolley system (100) according to claim 9.
